# EUROPEAN PATENT APPLICATION

(11) **EP 1 318 685 A2**
(43) Date of publication of application: **11.06.2003**
(21) Application number: 02257842.1
(22) Date of filing: 13.11.2002
(51) Int. Cl.: H04Q 7/22

(54) **Communication system for sending audio messages from an originating communication device to a group of terminating communication devices**

(30) Priority: 22.11.2001 GB 0127968; 19.06.2002 GB 0214080
(71) Applicant: Massenzio, Marco, Cottenham, CB4 8XR (GB)
(72) Inventor: Massenzio, Marco, Cottenham, CB4 8XR (GB)
(74) Representative: Gosnall, Toby

(57) **Abstract**

A communication system is provided comprising one or more processing units (112, 116) to which one or more communication devices (101, 102) (for example, mobile telephones) are arranged to be connected via one or more communication links (111, 123). The or each processing unit (112, 116) is arranged such that at least one (the originating) communication device (101, 102) connected thereto can send a message capable of generating an audio message, said message being categorised in a predetermined manner such that other communication devices (101, 102), which are connected to the system and are arranged to receive messages which have been categorised in a predetermined manner, receive such messages and generate an audio message therefrom. The messages may be categorised as originating from a communication device (101,102) belonging to a predetermined group of communication devices (101, 102).

## Description

This invention relates to a system arranged to facilitate communication between users, and related methods. In particular, but not exclusively, the system is arranged to allow users thereof to avoid traffic congestion.

Mobile telephones provide users thereof with the ability to keep in touch from locations remote from other communication media. Currently, mobile telephones are primarily second generation (2G), which provide a link dedicated solely to that user, between a user of the telephone and a base station. However, improvements are being proposed to this generation of telephone which provide addressed data packets to be used. These improvements are often referred to as 2.5G, or GPRS (General Packet Radio Service) and provide "always on" data packet connections. In the future third generation (or 3G) mobile devices are proposed that also provide "always on" data packet connections of large bandwidth, but with a higher data exchange rate than 2.5G.

In addition to the telephones discussed above, WAP telephones are available that allow a user thereof to browse primarily text based information sites. To use such a service, a user must enter the address of a site that they wish to view, and then use functions of the telephone to view the information obtained from the site.

However, to use any of the telephones discussed above, a user must know in advance with whom or with which site they are to direct their communication in order to make use of the telephone. Therefore, it may not be as convenient as desired to obtain information regarding events in which a user is interested.

Short Message Service (SMS) messages comprising up to 160 characters are also known for use on mobile telephones. Users can send messages to one another, but they can also subscribe to services that provide them with information that they desire. For example it is possible to subscribe to a service that sends the scores of his/her favourite football team soon after a game ends, etc. Such SMS message services provide only a single direction of data flow (once a user has subscribed to a service and requested the results to a particular team, etc.).

Voicemail systems running on mobile telephone networks allow callers to a particular telephone, which cannot be contacted, to leave messages for the user when the particular telephone next becomes contactable. For example, the telephone may be turned on after having been turned off, or may move back into contact with a base station after having been out of reach, etc. When the telephone is next contactable the voicemail message can be arranged to be automatically forwarded to the particular telephone.

Internet chat rooms are also known, which users can log on to and have discussions via his/her internet connection. A first user types at his/her keyboard, which typing appears on the screens of any other users logged into the same chat room. The other users can then respond via their keyboards, and their response again appears on the screens of any other users logged into that chat room.

US Patent No. 6,292,747, assigned to The IBM Corporation, proposes a network to enable communication between vehicles primarily for the purpose of exchanging travel information. However, the network requires users to carry devices in their vehicles and actively initiate communication between identified vehicles connected to the network in the same locality. Each device in the IBM patent is fitted with a positioning device enabling that device to determine its location, but any voice communication is carried out by means of a separate traditional cellular voice service.

According to a first aspect of the invention there is provided a communication system comprising one or more processing units to which one or more communication devices are arranged to be connected via one or more communication links, the or each processing unit being arranged such that at least one originating communication device connected thereto can send a message capable of generating an audio message, said message being categorised in a predetermined manner such that other communication devices, connected via at least one of the communication links to the system and arranged to receive messages that have been categorised in the predetermined manner, receive such messages, and generate an audio message therefrom.

An advantage of such a system is that users can send voice messages to a processing unit forming part of the communication system, and have these messages forwarded onto to other users who have registered to receive messages that have been categorised in the same way. Such a system can be used to disseminate information in quasi real-time, to a plurality of other users relatively easily.

The system may be arranged such that said received message is automatically played by said communication device.

The system may be arranged such that audio messages that have been categorised in the predetermined manner could be categorised according to the location of the users sending and receiving the messages or to one or more users specified by a user of the originating communication device. Alternatively, the categorisation could be done in some other way. The audio messages could be categorised in a plurality of categories. The system may be capable of sending messages to communication devices of users in a predetermined combination of categories.

The communication devices may comprise any one or more of the following: a telephone (preferably a mobile telephone), a Personal Data Assistant (PDA), a personal computer, or any other suitable device.

Preferably, the communication device is a mobile communication device, which is convenient because it allows a user to use the system from a variety of locations, and may be from a vehicle, which may be moving.

The server is arranged to receive messages, which contain at least an audio portion. Providing a system that is arranged to receive messages with an audio portion is advantageous because they may provide for more convenient operation by users of the communication devices. This is particularly convenient for communication devices such as telephones that are primarily designed to communicate using audio. A further advantage of audio components is that they may allow a user to leave a message without, or with minimal, use of his/her hands, which is particularly advantageous for situations such as when driving, etc.

It is conceivable that the system may be arranged to accept messages which are primarily text based, may be using SMS text based messages, and may be arranged to convert text messages to speech, or may be vice versa.

Preferably, the communication device is provided with a locator arranged to determine the location of the communication device. The locator may rely on the Global Positioning System (GPS), or may be the positioning information provided by 3G telephones, or any other suitable means for providing the location of the communication device, may be user input.

The system may be arranged such that the message sent by the communication device to the processing unit contains the location of the communication device sending the communication. Such an arrangement is convenient because it provides a system that can make use of the position of the communication device. For example, the system could be arranged to automatically forward messages to communciation devices if a message has been sent from an originating device within a predetermined distance of the receiving device.

Conveniently, the communication devices comprise a display, arranged to display information to a user thereof. In some embodiments, the display is arranged to graphically display the position of the communication device on a digital map.

In a possible embodiment, the map is arranged to display the condition of traffic on roads shown on the map. For example, if the road condition is good the road may be coloured green, and if the traffic condition is bad the road may be coloured red.

Indeed, some embodiments of the system provide the communication device with a mapping means, arranged to generate a map that can be displayed to the user. In such embodiments, the location of the communication device can preferably be overlaid on a map so generated. Such an arrangement is convenient because it allows a user to see his/her own location in relation to other users, traffic conditions, locations of interest, etc.

Conceivably, the server may be arranged such that any messages forwarded to other communication devices contain information relating to the position of the communication device that originally sent the message. Further, the communication device may be arranged to display the position of the communication device that originally sent the message on a map generated and displayed on the display. Such an arrangement is convenient because it allows a user of the communication device to see his/her own position in relation to the position of the communication device that originated the message.

Preferably, the communication devices are arranged to be controlled by voice commands from a user thereof. Such an arrangement is convenient because it may provide for safer/easier operation of the device in certain environments (for example when a user is driving a car).

Further, the communication device may be arranged to provide a user thereof with prompts, which are preferably audio, but may be via vibration, light emitting means (such as by flashing, etc.). Such an arrangement is convenient because it provides a user with a system that may conveniently be used without being overly distracting. Of course, any other suitable prompt may be used.

The processing units may be arranged to receive response messages in response to messages forwarded to other communication devices. Such an arrangement is convenient because it allows users of the system to provide feedback, and/or responses on messages that have been forwarded to him/her by the system.

Conveniently, the processing unit is arranged to receive response messages providing a rating on messages, or may be on the users sending the messages, that have been forwarded by the system. Such response messages providing a rating may be thought of as rating messages. The system may be arranged to generate a "user rating" according to the response messages received. Providing a rating in this manner may allow the system to reward users that are highly rated, or to penalise users who are rated badly, maybe as a result of using the system to send abusive, or otherwise undesirable, messages.

The response messages may comprise messages capable of generating audio, or may comprise other data entered onto a communication device.

The system and/or the processing unit may be arranged to prevent communication devices belonging to predetermined users from leaving messages. The predetermined users may be users that have previously left abusive, or otherwise undesirable, messages. Such an arrangement is advantageous because it helps to provide a system that is more pleasant and friendly to use. Indeed, the server may be arranged to prevent communication devices belonging to users that have left unreliable messages from leaving messages, so hopefully providing a more reliable system.

Conveniently, the communication links between the communication device and the server are of the type referred to as "always on" digital data. For example, the communication link may be a third generation mobile link, a GPRS connection, etc. Such a system is convenient because the communication device does not have to create a link each time that it is desired to send a message to the server. However, it will be appreciated that the system would work with dial up connections, and the like, but that these would be less convenient.

Further, each communication link preferably comprises at least two bidirectional channels. Preferably, the communication link comprises a voice channel, arranged to carry audio data, and a data link arranged to carry non-audio data. This arrangement may prove to be advantageous because it allows data to be sent in addition to audio data, without degrading the quality of the audio data. Most preferably, the audio message is sent via the data link, which is advantageous because it allows compression, encryption, etc. to be applied to the message, and the allows the system to operate in quasi-real time.

Preferably the communication link relies on Transmission Control Protocol/Internet Protocol (TCP/IP) or User Datagram Protocol/Internet Protocol (UDP/IP), communications, which are convenient, because they provide well known and tested communication protocols.

UDP/IP may be the preferred protocol because as will be appreciated from the following discussions, it is advantageous if the system runs in quasi-real time, with messages being sent to other communication devices as quickly as possible to try and ensure currency of data. The skilled person will appreciate that UDP does not have the same reliability level as TCP/IP. This lower level of Quality of Service may be appropriate for the subject system, since it may be more important to lower the processing load on the system, rather than ensure that the message has got to all of the intended recipients - this is also in line with the anticipated "multi-cast" operation of the system.

Preferably, the communication links are provided by cellular 2/3G mobile phone networks (GSM/UMTS, IS-95/cdma2000, IS-136, etc.), but could equally be provided by other wireless technologies such as W-LAN (802.11a/b) links, Bluetooth links, etc.

The system may be arranged to hold an account for each of the communication devices that are capable of communicating therewith.

Preferably, the system is arranged such that when a communication device creates a connection to the server, the server verifies predetermined account details. The predetermined account details may comprise any one or more of the following: user identity, password, etc. The predetermined account details help to provide a more secure system.

The system may be arranged to perform more than one verification, and may perform two verifications. A first verification may be arranged to verify that the user can use the communication network providing the system. For example, this may be a verification that the user can use a wireless link provided by a particular cellular operator. A second verification may be arranged to determine whether the user can use the system.

The first verification may be arranged also to provide the second verification. Such an arrangement may occur in systems in which the ability to send/receive messages categorised in a predetermined manner is provided as a service to all, or some, users of the underlying communication network, whereas if the system was provided by a third party there may need to be a second verification.

The system may further be arranged such that a user of the system can set predetermined preferences for any one account. Such an arrangement is convenient because it may allow a user to tailor the system to his/her preferences. For example, the type of features made familiar by internet chat rooms such as 'friends' lists to specify a categorisation, or 'favourite' lists to specify the favoured categorisations. The device may have a default categorisation for its messages, or may assign the messages to a categorisation made relevant by the geographical location of the device. Further improvements could be geographically relevant information, such as the nearest service station or a list of restaurants in the area. In an example of a refinement to this idea, the service stations could be rated according to their services provided, or the expense of fuel. Services such as these are commonly referred to as Value Added Services (VAS).

Conveniently, the system may be arranged such that a user can alter his/her predetermined preferences by creating a connection to the server, which may be in addition to the communication link with which the communication device communicates with the server. The preferences link may be made from a computing device such as a personal computer. Using a computing device may be convenient because it may provide a more convenient way of adjusting the preferences than from a communication device such as a mobile telephone, which are not generally designed for text based entry. The skilled person will appreciate that it would be possible to alter the predetermined preferences over a communication link.

The system may be arranged to automatically categorise messages received thereby in the predetermined manner, providing a convenient system, which requires less user interaction than compared to a system in which a user must categorise his/her own messages.

The predetermined manner in which the message is categorised may depend upon the location of the communication device that sent a message to the system. Such a system may prove useful in allowing a user to send messages about the location in which he/she is using his/her communication device. The predetermined manner in which the message is categorised may be likened to chat rooms or areas, to which users can log onto in which to receive messages directed toward that chat room, or area.

In one particular, may be the preferred, embodiment the system may be arranged to allow a user of a communication device to send messages, which in the preferred embodiment are voice messages, about traffic surrounding his/her location. Other users may be able to have messages sent to them regarding traffic in a location in which they are interested, perhaps because it is on a route, which they are proposing to proceed along.

The server may be arranged to automatically forward messages to communication devices if a message has been sent from a device within a predetermined distance of the device that sent the message. Such an arrangement is convenient because it may provide useful information regarding the locality of a communication device, which may provide relevant information such as traffic conditions, etc.

Alternatively, or additionally, the server may be arranged to provide a list of categories, and/or traffic groups similar to Internet chat rooms. Such an arrangement may allow users to readily select the categories from which they wish to have messages sent. In one example that may prove advantageous, a user may select an area in which they are not currently travelling but may be approaching and have messages sent to them regarding traffic information from that area. This may be thought of as a group concept in which users in the same group have messages from any the member of that group forwarded to them, preferably automatically. A category may relate to any topic. For example a category may exist for vehicles on a predetermined road, or may exist for vehicles within a predetermined radius of a town, or may exist for drivers of a particular make of car or maybe drivers of a type of vehicle (e.g. motor bike, car, etc.).

Indeed, the system may be arranged such that users are dynamically assigned to a group. The dynamic assignation of a user to a group may be determined by amongst other parameters the geographic location of the user and/or communication devices being used by the user. The user may be able to register with a group or groups, and such registration may over ride the dynamic assignation.

Recipients of a message may be determined by set logic (e.g. Venn diagram logic) based upon the category that it is intended to transmit a message. For example it may be desired to arrange the system such that a message can be sent to all drivers of a predetermined make of car, on a predetermined road, or the like (e.g. predetermined make of car category intersection predetermined road category).

Preferably, the system is arranged such that messages received by the processing unit are forwarded to other communication devices connected to the system in roughly real time, or quasi-real time. Such an arrangement is convenient because it helps to ensure that information sent to the system is current and not dated before it is sent to the other communication devices.

Conveniently, the system comprises a plurality of processing units, which are geographically separated from one another. Such an arrangement is advantageous, because it can help to reduce the physical distance between a communication device sending a message to the system, and the processing unit. Reducing the physical separation in this manner can reduce the latency of the system, and thus help to improve the currentness of messages sent to and from the system, as well as reduce the load on the network and associated processing units.

The system may comprise a central server, which is preferably connected to each of the distributed processing units. Such a server is useful because it may provide a central control of the system, which may be useful for storing parameters and/or data that it is convenient to hold centrally for access by any one of the processing units.

The system may be arranged such that the processing unit is arranged to send a signalling message to the central server, said signalling message preferably not containing an audio portion of the message sent to the system. Such an arrangement is advantageous because it allows the server to keep track of the messages that have been handled by the system, whilst reducing the network traffic between the processing unit and the central server.

The processing unit may be arranged to send a signalling message that aggregates information relating to a plurality of messages sent to the system. Such an arrangement is convenient because is also reduces the communication between the processing unit and the central server; sending a single large message has less communication overhead than sending a plurality of smaller messages.

Alternatively, or additionally, the system may be arranged such that signalling messages are not sent to the server. For example, a user may be allowed to log on to the system for a predetermined time. The server may be arranged to receive a log in message when the user logs in to the system, and may be further arranged to send to the processing unit a log-out message when the predetermined time has expired. Such an arrangement may be applicable when the user is billed on a time basis rather than on a per message basis.

The predetermined time may be roughly any one or more of the following times (or any time in between): 5min, 10min, 15min, 20min, 25min, 30min, 35min, 40min, 45min, 50min, 55min, or more.

The processing units (as dedicated hardware and/or "add-on" server software) may be collocated with Radio Network Controller(s) (RNC) of a cellular network. Such an arrangement provides a convenient system that can be used with existing networks, and as such may be retro fitted without the need for a new network infrastructure.

The processing unit may be arranged to multi-cast the sent message so that any communication device capable of receiving the message can do so, provided the users has elected to receive such messages. Such an arrangement is advantageous because it reduces the processing performance required by the processing unit, because messages are simply forwarded, and may be received if desired by any communication device capable of receiving messages from the server.

Should the processing unit simply multi-cast any messages sent to the system, the communications device capable of receiving such broadcast messages may be arranged to filter the messages so that a user thereof is only alerted to messages in which he/she is interested. Such an arrangement is advantageous because it reduces the amount of "spam", or unwanted, messages to which the user must be alerted.

Alternatively, or additionally, the processing unit may be arranged to multi-cast the message such that only communication devices which have registered with a particular area and/or chat room receive the message. This arrangement will reduce the number of unwanted messages that a communication device will receive, and may make the system more user friendly.

The system may be arranged to provide a contention reservation mechanism, which ensures fairness to users by providing each a turn, which may comprise a predetermined time period, in which they may send a message. This helps to ensure that messages are sent consecutively rather than concurrently, and users will not 'talk over' each other.

According to a second aspect of the invention there is provided a processing unit arranged to communicate with one or more communication devices via one or more communication links, the processing unit being arranged to receive messages, and categorise received messages in a predetermined manner and further, the processing unit is arranged such that it forwards received messages such that the forwarded messages are capable of being received by other communication devices.

The processing unit may have any of the features of the server discussed in relation to the first aspect of the invention.

According to a third aspect of the invention there is provided a method of distributing data received from a communication device to one or more communication devices categorising said data in a predetermined manner and forwarding said data to said one, or more, communication devices which are registered to receive data that has been categorised in that predetermined manner.

The method may provide a communication link between any one communication link and a processing unit on a fixed price basis. An advantage of such an arrangement is that a user thereof will not be put off from using the system due to cost; i.e. once they subscribe they may not be charged further for making use of the system providing the method.

Conveniently, the method comprises providing users with a rating according to that particular users effectiveness. For example the method may rate users according to the number messages that they send to the server, which other users believe to be useful.

The method may allow other users to rate messages sent to the server. The message rating may be on a scale, such as 1 to 5, or may allow users to leave audio ratings from a predetermined selection (for example useless, poor, average, good, useful).

The method may comprise giving users with a high rating a reward, which may comprise a discount for use of the system. The discount may be for future or past use. An advantage of such a method is that it may provide an incentive for users to use the system, so providing a useful system for all the users thereof.

The method could comprise sending data to communication devices of users registered in a predetermined combination of categories.

In an alternative, or additional, embodiment the method may provide rewards other than discounts for use of the system. The rewards may for example comprise any one or more of the following: points for redemption against predetermined selections of goods, predetermined goods, entry into a draw, entry on a list showing the user with the highest rating, or any other suitable incentive producing reward.

The method could comprise checking for available software updates for software running on said communication devices across a communication link.

According to a fourth aspect of the invention there is provided a communication device capable of communicating with a server according to the third aspect of the invention.

According to a fifth aspect of the invention there is provided a computer readable medium carrying instructions to cause a computer to perform the method of the third aspect of the invention.

According to a sixth aspect of the invention there is provided a computer readable medium carrying instructions arranged to cause a computing apparatus to function according to the first aspect of the invention.

According to a seventh aspect of the invention there is provided a computer readable medium carrying instructions arranged to cause a computing apparatus to function according to the second aspect of the invention.

The computer readable medium may be any one or more of the following: a floppy disk, a CDROM, a DVD ROM/RAM, a magneto optical disk, a ROM, a RAM, a transmitted signal (which may an internet download, or the like).

There now follows by way of example only a detailed description of an embodiment of the present invention with reference to the accompanying drawings of which:

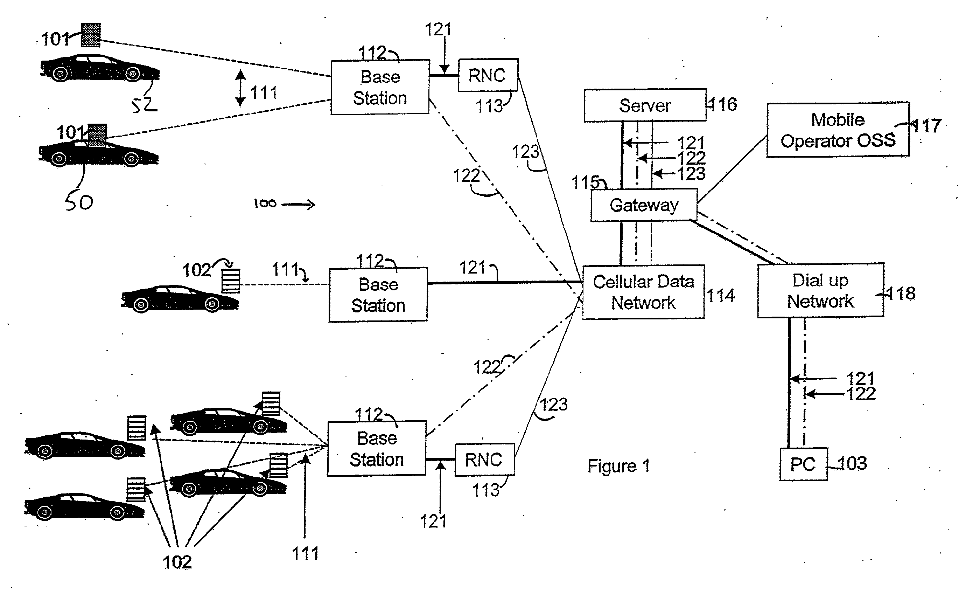

**Figure 1** shows an overview of a system according to the present invention with a plurality of communication devices communicating with a server;
**Figure 2** shows an overview of the processes running on a communication device;
**Figure 3** shows an overview of the processes running on the server;
**Figure 4** shows a message flow relating to user's access and authentication processes, and
**Figure 5** shows a simplified message flow chart relative to the exchange of messages between users

This invention will be described in relation to a system 100 allowing users thereof to alert other users thereof to traffic congestion that should be avoided. However, the skilled person will appreciate that the system may be used for other purposes and in its broadest concept may allow users to send messages relating to a particular topic, which are forwarded to other users also interested in that topic.

The system provides a plurality of mobile communication devices, which may be provided, for example, by mobile phones 101 or personal data assistants (PDAs) 102 with, in this embodiment, the ability to leave audio messages, which can be transmitted to predetermined other such devices. The system may be extended to any mobile device that has the facility to record and playback voice data and has capability to communicate with a remote station wirelessly. In the described embodiment the communication devices are generally mounted, or carried, within vehicles. For example cars such as 50, 52 each carry mobile phones that are capable of communicating with the system 100.

In this embodiment the mobile communication devices 101, 102 are connected using GPRS or Universal Mobile Terrestrial System (UMTS), also known as 3G, cellular networks. Connection is provided between each mobile communication device and one of a plurality of base stations 112 of a mobile telecommunications network by means of a radio link 111. Connections are made between the base stations 112 and a cellular data network 114 such as may be run by a mobile telecommunications operator. In this embodiment the server functions are on a server 116 on a separate network connected by a gateway 115, to the cellular data network. However, in other embodiments the server 116 may be provided on the cellular data network.

Connections between the mobile communication devices 101, 102 and the server 116 use UDP/IP (User Datagram Protocol / Internet Protocol) over a GPRS or UMTS connection. Each mobile device 101, 102 has two bidirectional channels: a voice connection 121 and a signalling connection 122, of which only one is shown. The voice connection 121 is used to transmit voice messages and the signalling connection 122 is used to transmit the data required to interact with applications running on the server 116. (For example access registration/authentication, system resources access, to access, retrieve, and update user status and configuration information).

Voice connections 121 from various mobile communication devices 101, 102 may be terminated at one of a plurality of Radio Network Controllers - RNCs 113, which manage radio access to the system. Associated with each of the RNC's is a processing unit arranged to receive and processes messages sent from the mobile communication devices 101, 102. (In this embodiment the processing unit is provided by the same processing unit that is providing the RNC, but the functionality of the system described herein is provided by software in addition to that providing the RNC functions). The messages comprise audio portions, which have been recorded by the communication device and forwarded across the voice connection 121, which are, encoded as compressed audio signals compatible with the underlying network.

Connections 123 are provided between the processing units associated with the RNCs 113, the RNC's and the server 116. In other embodiment it is possible to connect the voice channel directly to the server 116, if the necessary software is not present on the relevant RNC 113 or there is no RNC 113, in which case the server 116 would carry out the system functions normally carried out by the RNC 113.

The skilled person will appreciate that the connections 123 between the RNC's 113 and the cellular data network 114 are generally heavily loaded with network traffic. This is compounded by the fact that in many telephone networks, an RNC 113 is connected to several Base Stations (node B's in 3GPP terminology). Therefore, it is preferable if the messages are processed at the RNC 113 locally rather than being relayed to the server 116, since this is likely to reduce the delay in forwarding the message. It may be possible to provide the processing unit within a base station 112, which may increase the performance of the network even further when compared to positioning the processing unit in the RNC 113.

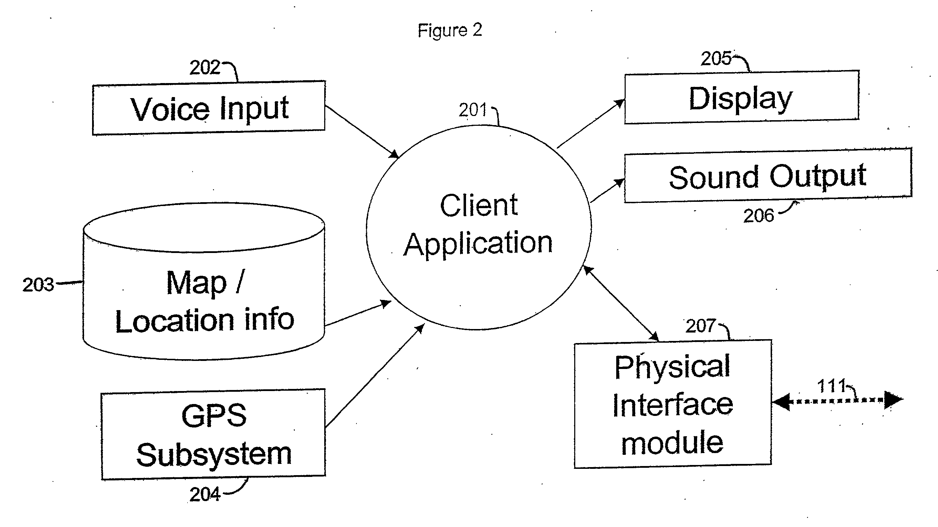

Figure 2 shows the functions provided by an application installed on a PDA 102 or mobile phone 101 of the above system. Provided to the client application 201 are facilities 202 for recording and digitising voice data, and optionally a database containing map and location information 203, a Global Positioning System (GPS) subsystem 204, display means 205, sound outputting means 206 and a physical interface module 207, Location information could alternatively be provided by the user. The physical interface module 207, software which forms the interface between the client application and the physical world, is connected to a base station 112 by means of a GPRS/UMTS radio link 111.

As will become apparent from the description hereinafter, the functions running on the system 100 provide a mobile communication device 101, 102 user the possibility to register with areas or "chat rooms" that will provide messages relating to a predetermined, specified topic. In the particular embodiment described the predetermined specified topics relate to traffic conditions on predetermined sections of road. For example, a particular area, or chat room may relate to the traffic conditions around Junction 6 of the M6. The chat room onto which the user is logged provides the predetermined categorisation for messages sent to the system, or processing units.

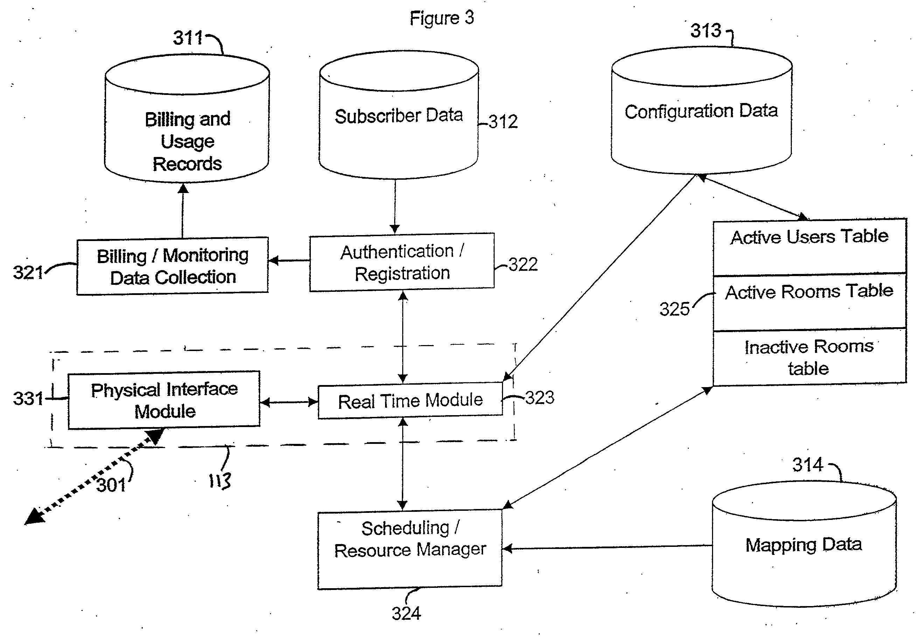

Figure 3 shows the functions provided by the server 116 of the above system. A real time module 323 responds in real time to communications from a mobile communication device 101, 102, and a physical interface module performs communications with the RNC's 113 and/or base stations 112. Both the real time module 323 and the physical interface module 331 are preferably run on the RNC's 113 for the reasons discussed above, but could be run on the server. Running these two modules on the RNC's 113 help to minimise bandwidth requirements of the connections 123 and helps to ensure sufficiently fast forwarding of messages received by the system 100.

The remainder of the elements of Figure 3 as will be discussed herein after may conveniently be run on the server 116 since the functions provided by these elements will not be time critical, and will be used less often so that bandwidth requirements should not be such an issue. The server provides an authentication registration function 322, which allows users connecting to the service to be authenticated. This authentication/registration function 322 can be accessed across the connection 123, via the data network 114, and gateway 115, by the real time function 323 running on the RNC 113.

It will be appreciated that two levels of authentication may be required: a first onto the network providing the communication and a second onto the system providing the message system. In the embodiment described herein the second level of login is automatically performed when a user logs onto the communication network, i.e. when they activate his/her telephone, etc. The communication network provider provides the message system as a free service to all users and thus there is no need to perform the second level of login to see if a user is entitled to use the message system.

In use the authentication/registration function 322 accesses a subscriber database 312 to perform this authentication and sends an authorisation command back to the real time module 323 if the user should be allowed a connection 111 to the system 100.

Use of the system 100 by a particular mobile communication device is monitored by a billing and monitoring function 321 so that the device 101, 102 can be charged appropriately. The billing and monitoring function 321 writes records to a billing and usage database 311.

System configuration details are stored in a system configuration database 313 which is accessed so that messages to any one device are as desired by the user of that device 101, 102. Subscriber, or user, database 312 contains details such as user preferences and could be stored on the server 116, or possibly on the communication devices 101,102.

The real time module 323 also has access to a network status list 325 which lists which users are active and whether any given "chat room" is active or inactive. However, the network status list is only periodically checked, perhaps every 5 minutes, to try ensure that the connections 123 are not overloaded, and to help ensure that the forwarding of messages received by the RNC's 113, and base stations 112 occurs in quasi real time.

The server may be provided with a mapping database 314 that provides geographically appropriate information about hotels, places of interest, etc. If the mapping database is supplied, it may use GPS information forwarded from the communication devices 101, 102 in order to determine which map data is relevant. Generally, it is likely that the position of the device would only be determined periodically, again so that the connection 123 is not overloaded, and further so that the forwarding of messages is not delayed. A database in maintained that holds information about points of interest which may be in a region of a user of the system and a Value Added Service may be to provide such information if requested by a user.

In use, users travelling in their vehicles will have the client application 201 running on their PDA 102 or mobile phone 101. Authentication details may be stored on the PDA 102 or mobile phone 101 or a password or the like may be requested on start-up of the client application 201. The PDA 102 or mobile phone 101 transmits this authentication data over the signalling connection 123, via the cellular data network 114 via the gateway 115 to the server 116. The authentication and registration function 322 of the server 116 then checks that the authentication is correct and there is no reason to refuse user log in and subsequent use of the system. Such reasons include failure to pay bills or exclusion due to anti-social behaviour or other abuse of the system. Once authenticated the user of the mobile telephone 101/PDA 102 is allowed to use the full range of functions running on the server 116, and is logged on. Log on and authentication are handled by the communication network providing the underlying communication network, and the processes will not be described further here.

Once a user has been authenticated and is logged on, they may provide information about their position or the GPS subsystem 204 running on the mobile communication device 101, 102 provides the client application 201 with the position of that device 101, 102. The client application 201 uses this position data to overlay the user's position on a map derived from the map and location database 203 and displays both the position and relevant map portion on the display means 205. The position is transmitted over the connection 111, via the signalling channel 122 to the system 100. The scheduling / resources manager 324 calculates the position of the user from data from the mapping database 314. It then searches the network status lists 325 to see what other users are in the same chat room, or location, as that user.

Should a user encounter traffic congestion on his or her travels, they are expected to send a message to the system. Once logged on, the PDA 102 or mobile phone 101 awaits voice commands from the user, using the voice input means 202. If the user wishes to send a message, then they say the relevant command, e.g. "message", to the device 101, 102. It responds, perhaps after a pause due to a contention reservation system arranged to prevent messages colliding, by means of a "go-ahead" tone, and the user sends the message, e.g. "heavy traffic on Acacia Avenue due to burst water main". The message is transmitted to the relevant processing unit at the RNC level for the locality via the voice channel 121.

In some implementations, a signalling message is transmitted from the RNC 113 to the server alerting the server 116 that a message has been received from that RNC 113. At this stage the audio message is not transmitted to the server 116 to reduce the bandwidth requirements of the connection 123. If users are logged onto the chat room, or area, to which the message is sent at other RNC 113 then the server 116 causes the audio message to be routed to all of the RNC's 113 that require the message. The processing units at the RNC 113 level are arranged to buffer the signalling messages so that a plurality of messages can be sent at any one time, thus reducing the communication overheads on the link to the server.

When the RNC 113 receives a message from a user, it automatically forwards that message to any other users logged onto the same chat room. For example, the cars 50, 52 may be in relative physical proximity to one another, perhaps a few miles, or even less, driving apart on the same stretch of road, and therefore, they are logged into the same chat room. If the user of the communication device 101 within car 50 (assuming this car is ahead) might hit traffic and choose to leave a message, which is automatically forwarded, in quasi-real time, to the communication device 101 within car 52. Therefore, the occupants of the car 52 are alerted to the conditions to which this message refers (perhaps "traffic stationary", or the like).

In a similar scenario, the driver of car 52 might want to have an update on traffic status ahead, and send a message requesting information to the other users logged in the same 'chat room' - the occupants of car 50 might then provide such information (perhaps "there is a half-mile queue just after J6, you're better off leaving M6 and taking a detour") - thus, possibly, earning "rating points" (and gratitude) from the driver of car 52.

When the PDA 102 or mobile phone 101 receives a message, the sound output means 206 is used to play the message back to the user, and the position of the user that sent the message is displayed on the display 205. The skilled person will appreciate that the display is an optional feature, and that the system 100 would prove useful with just the audio portion of the messages.

When the user receives a message, they have the facility to "rate" the user who sent it on the basis of the message content. They can instruct the mobile phone 101 or PDA 102 to return to the RNC 113 a rating by saying such commands as "excellent", "good", "average", "useless" or "inaccurate", as regards to the usefulness of the message. The processing unit associated with the RNC 113 forwards such a "rating message" to the server 116 so that a rating for the user to which it relates can be built up in the subscriber database 312. Users that send many highly rated messages may receive such rewards as cheaper subscriptions, gifts or merely the satisfaction of seeing themselves at the top of a league table. Users also have the facility for reporting users abusing the service, for example by sending abusive or commercially exploitative messages, by giving a command such as "abuse". The offending message would then be reviewed by the administrators of the system, who could then possibly block the offending user's account. Individual users may also block reception of messages from other individual users that they do not wish to receive messages from by giving the command "block".

Because the message is multi-cast to all Users currently logged on the 'chat room', they can also make a reply thereto, in addition to the rating message described above by sending a response message. The response may allow the user to add to the content from the original message. For example, the response may say that the traffic is running freely, or is beginning to back up, that "detouring" is pretty much useless as also adjacent roads are clogged, etc. The contention reservation mechanism described above helps to ensure that users do not talk over one another, and fairly provides each of the users logged into the same chat room with a window of time in which they can respond to a message. The time window in which a user can leave a message may be represented by the illumination of a light, a tone emitted from the communication device, etc. (Although it will be appreciated that the system is quasi-real time and to ensure the system is commercially advantageous for the mobile network operator, it is advantageous if there are slight delays in order to prevent users having lengthy conversations).

The PDA 102 or mobile phone 101 of this system may be provided with, in addition to the voice driven interface discussed above, a menu driven interface. In addition to displaying the map as detailed above, it may provide access to the functions above, and furthermore to configuration settings to request that the server 116 update the configuration database with details of the user's name, etc.

Also connected to the system may be a number of personal computers (PCs) 103, although this term is not meant to include only those computers with an IBM PC architecture, but any computer capable of forming a TCP/IP connection to the Internet. The interface on the PC 103 may be a web based form. The availability of connecting a PC 103 to the system allows easier configuration of user details than might be available via a PDA 102 or mobile phone 101. In addition, this means that a user can check for traffic before he or she sets out for his or her journey. Any function of the system may be extended to be available from the PC 103. Connection from the PC 103 to the server 116 is by means of a dial up network 118, which connects to a gateway 115 as for the mobile devices 101, 102. However, as there will not be RNC's 113 on the dial up network the voice channel 121 has to terminate on the server 116 as in the case where the RNC 113 does not have the necessary software above.

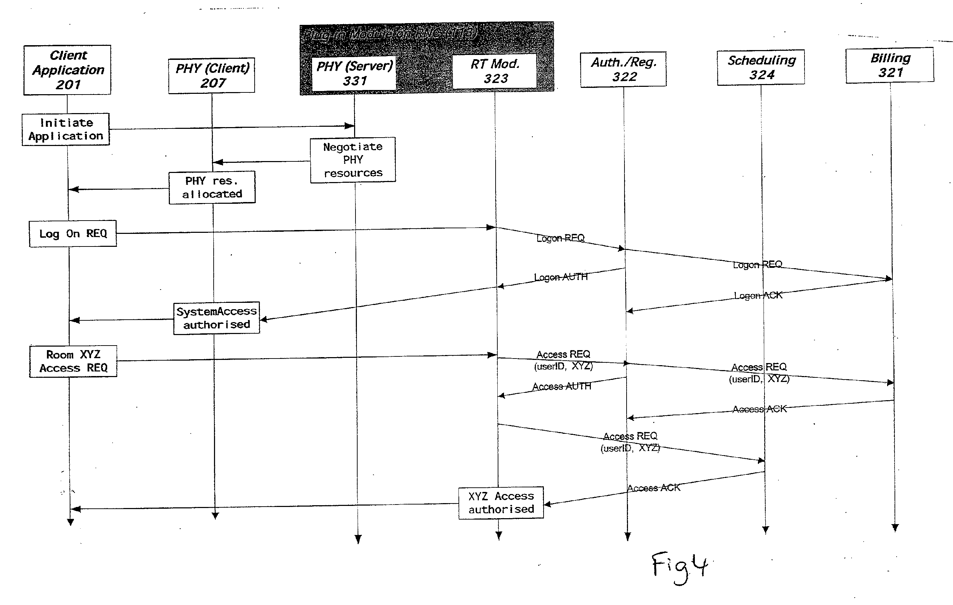

Figure 4 provides a simplified message flow diagram, showing the interchange of messages among the different units comprising the system. The process assumes the user has already been authenticated and given access to the mobile wireless system by the network operator/service provider by system specific means (e.g., USIM in UMTS networks).

The application will initiate a "handshake" process to negotiate access to physical resources either when the device is turned on (embedded devices) or when the user starts the application on a PDA/mobile phone 101/102.

The client PHY (physical interface) module 207 will negotiate service parameters with the server side PHY (physical interface) module 331, which will attempt to reserve system resources for the user from the RNC 113 by appropriate means, specific to each mobile network implementation.

If the required physical (PHY) resources are available (for example, but not limited to, bandwidth on the wireless air interface) the client application 201 will then initiate the log on process, most likely by requiring the user to input a user ID and password.

The Real Time (RT) module 323 will receive such log on request, and will interrogate the Authentication/Registration module 322 which, in turn, will consult the Subscriber Data database 312 to verify the user's identity and subscription access level.

Optionally, the Authentication module 322 may send a log on REQ message to the billing interface module 321, which will store user's access data for further processing.

The acknowledge (ACK) message from the billing interface module 321, although necessary to monitor system health and correct functioning, is not considered necessary to authorise users' access to the system - thus the Authentication module 322 will authorise user's access once Subscriber Record data 312 have been verified, but without waiting for the Logon ACK message from module 321.

If the user ID/password verify, the Authentication module 322 will send a Logon AUTH message back to the RT module 323, which in turn will authorise system access to the user, at the same time allocating system resources to the user (if applicable).

Once the client application 201 is granted access to the system it will attempt to "enter" one of the virtual rooms, say room XYZ (either automatically selecting the most relevant one, e.g. by making use of mapping/location data 314, or by user's manual selection) - in any case, the process will generate a Room Access Request REQ (used, XYZ).

Such request will be relayed to the RT module 323 which will verify that a number of conditions are met:
room XYZ exists and is 'active';
userID has logon access to room XYZ;
enough system resources are available to add another user to room XYZ;
userID access to room XYZ does not degrade system performance beyond an acceptable level;
other, as applicable to the practical implementation

This may require the RT module 323 to interrogate the Authentication module 322, sending an Access REQ(userID, XYZ) and wait until a room Access AUTH message is returned.

The authentication module 322 may record user access to room XYZ by sending a REQ signal to the Billing interface module 321 - and again, in certain implementations, it might not be required to wait for the ACK message to be returned by module 321.

Once the RT module 323 has verified that the user has access to room XYZ it will inform the Scheduling module 324 sending a room Access REQ(userID, XYZ) message.

The Scheduling module 324 will in turn update the various system Tables 325, adding, amongst other things, userID in the list of Active Users Table, and noting userID as belonging to room XYZ in the Active Rooms Table (the latter will be used by the RT Module when multi-casting messages to all users in room XYZ and will need to retrieve a list of these users). It is conceivable, although not mandatory for proper functioning of the system, that such tables (or a relevant subset) might be 'cached' in local storage at the RNC module 113 level, so as to avoid frequent costly access to network resources by module 323.

Also, if system policies allow, it might be conceivable that the Resource Manager module 324 might bring (possibly 'inactive') room XYZ from the 'inactive' state to the 'active' state upon userID request: in other embodiments, only a System Administrator can change rooms' state.

If all the above conditions are met, and RT module 323 receives an ACK message from the Scheduling/Resource Manager module 324, subsequently the user is granted access to room XYZ and an Access Authorised message is returned to Client application 201.

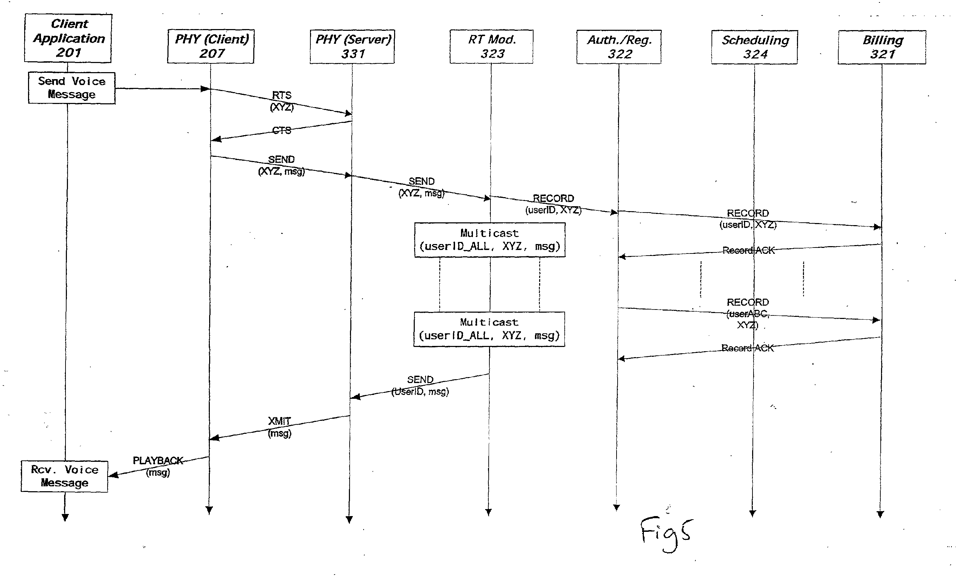

Figure 5 shows a possible sequence of messages, occurring once the user (userID) is authenticated and granted access to the system - here the user is additionally supposed to have been granted access to one of the 'active' virtual rooms (XYZ) as outlined above (Figure 4).

It is conceivable that the Client Application 201 may either prompt the user to speak its message (e.g., by means of a vocal prompt "Speak now" played by means of the Sound Output 206) or the user may require the Application 201 to listen to a voice message (e.g., by means of a command such as "Send Message" spoken to the Voice Input 202).

In either case, the Client Application 201 will record such voice message (possibly up to a limited duration) by means of a Voice Input 202 subsystem, and a temporary local store (not shown in Figure 2).

It is conceivable that the Client Application could record, digitise and compress the voice message in either a widely accepted format (e.g. WAV, MPEG-1, MP3, etc.) or in a proprietary audio compressed format suitably conceived to optimise the system performance. Besides, the speech portion, and possibly the entirety, of the message could be encrypted to ensure against eavesdropping and/or unauthorised usage of the system.

Once the message has been converted into a suitable binary format, the Client Application 201 will alert the PHY module 207, which in turn will require permission to send (Request to Send, RTS) to the PHY (Server) interface 331. If there are enough physical and system resources available, the PHY (Server) interface 331 will send back a permission to send (Clear to Send, CTS) message to the PHY (Client) module.

Upon reception of the CTS message, the PHY module 207 will send the message using a SEND(XYZ, msg) message, comprised of a suitable 'header' portion (e.g., identifying userID, the roomXYZ the message is sent to, and other useful system parameters, necessary, for example, to decrypt, decode and decompress the audio portion) and a 'data' portion, mostly composed of the binary data (encrypted/compressed digitised audio portion).

This same data message is immediately relayed to the RT Module 323 which will manage proper multi-casting to all the users currently logged on room XY (possibly accessing the list of Active Users 325, by communicating with the Scheduling module 324, or a locally cached copy).

The RT Module may also record relevant monitoring and billing data pertaining to the message and userID by sending a RECORD(userID, XYZ) message to the Authentication module 322 - which will in turn pass this information to the Billing interface 321.

Depending on system policies and particular implementations, it may not be necessary for the RT module to wait for an acknowledgement signal ACK back from the Authentication module 322 (which in turn will be expecting an ACK from the Billing module 321) before relaying the message to the users logged on room XYZ.

It should be noted here however, that the system may be configured in such a way to communicate back to the user userID that, for example, only a certain number of 'free' messages (where these are included in a subscription package) are left, or that the current cost for the service has reached a certain level, and so on.

Once the RT module 323 has the list of active users belonging to room XYZ (userID_ALL) and, if required, has received the ACK message back from the Auth. Module 322 - it will send the message to each of them using the procedure described below.

For each user userID, it will signal to the proper PHY (Server) interface 331 that a voice message is ready to be sent, by means of a SEND(userID, msg) message. The PHY (Server) 331 interface will in turn, send the voice message msg to the PHY (Client) 207, over the air interface, by means appropriate to the particular cellular network employed 111 (it is important to note, here, that the message msg is sent using a data channel, and not a voice channel, as currently used in mobile voice telephony applications).

Upon reception, the PHY (Client) interface 207 will alert the Client Application 201 that a message has arrived by means of a PLAYBACK(msg) function call - the message will in turn be decoded, decrypted (if applicable) and decompressed in order for it to be played back to the user by means of the Sound Output subsystem 206.

This process is inherently iterative and will continue until either the user logs out of the system or the user comes out of coverage of the mobile network or the service is terminated because of lack, for example, of sufficient physical resources on the wireless 'air interface' 111, or any of the 'core network' 121/122/123 links.

It should be noted here, that RECORD messages, which are shown in Figure 5 as relative to each individual message, may, is particular embodiments of the system, be sent by the RT Module 323 to the Billing interface 321 (via the Authentication module 322) in aggregated form only in order to save network resources, or to minimise storage systems 311 requirements (particularly where individual message records are necessary only for monitoring/statistical purposes and not billing purposes).

## Claims

1. A communication system comprising one or more processing units (112, 116) to which one or more communication devices (101, 102), including at least one originating communication device, are arranged to be connected via one or more communication links (111, 123), the or each processing unit (112, 116) being arranged such that the at least one originating communication device (101, 102) connected thereto can send a message having an audio component, **characterised in that** said system is arranged to allow communication devices (101, 102) to be dynamically assigned to a group, the system is further arranged such that it categorises messages received thereby as belonging to that group such that other communication devices (101, 102) registered to the same group and connected via at least one of the communication links (111, 123) to the system receive such messages, and generate an audio message from the audio component.

2. A system according to claim 1, further **characterised in that** the or each processing unit (112, 116) is arranged to receive response messages from a communication device (101, 102), sent by that communication device in response to messages forwarded from an originating communication device (101, 102).

3. A system according to claim 2, further **characterised in that** the or each response message is arranged to provide a rating on messages received by the or each processing unit (112, 114) from an originating communication device (101, 102).

4. A system according to claim 2 or 3, further **characterised in that** the system (100) is arranged to receive response messages comprising at least an audio component and may comprise additional information and signalling data.

5. A system according to any preceding claim, further **characterised in that** said system (100) is arranged such that the communication devices (101, 102) belonging to predetermined users can be prevented from sending a response message.

6. A system according to any preceding claim, further **characterised in that** said system is arranged such that messages received by the processing unit (112, 116) are forwarded to other communication devices (101, 102), connected to the system (100) and registered to the same group, in roughly real time, or quasi-real time.

7. A system according to any preceding claim, further **characterised in that** the or each processing unit (112, 116) is arranged to multi-cast messages, to the at least one communication device (101, 102) connected thereto.

8. A system according to any preceding claim further **characterised in that** said system is arranged such that users thereof register (322) with one or more groups, which may over ride the group to which they have been dynamically assigned.

9. A system according to claim 8 further **characterised in that** said system is arranged to allow a user to register (322) in a plurality of groups.

10. A system according to any preceding claim, further **characterised in that** said system is arranged to register the communication device in a group according to the location of the originating communication device.

11. A system according to any preceding claim, **characterised in that** said system (100) is arranged to automatically categorise messages received thereby into a group.

12. A system according to any preceding claim, **characterised in that** said communication device (101) is arranged to be located within a vehicle (50, 52).

13. A processing unit (112, 116) arranged to communicate with one or more communication devices (101, 102) via one or more communication links (111, 123), the processing unit (112, 116) being arranged to receive messages having at least an audio component, **characterised in that** said processing unit (112, 116) is arranged to categorise the received message as belonging to a group and further arranged such that the processing unit (112, 116) forwards received messages such that the forwarded messages are capable of being received by other communication devices(101, 102) registered with the same group.

14. A method of distributing messages comprising at least an audio component received from an originating communication device (101, 102) registered with a group to one or more communication devices (101, 102), **characterised in that** the method comprises categorising said data as originating from a communication device (101, 102) registered with that group and forwarding said message to said one or more communication devices (101, 102) registered with the same group.

15. The method of claim 14, **characterised in that** said method provides a communication link (111, 123) between any one communication device (101, 102) and a processing unit (112, 116) on a fixed price basis.

16. A method according to claim 14 or 15 **characterised in that** the method comprises forwarding data to said communication devices (101, 102) in roughly real, or quasi-real time.

17. A method according to any of claims 14 to 16, **characterised in that** the method comprises multi-casting messages to such that at least one communication device is capable of receiving the message.

18. A method according to any of claims 14 to 17, **characterised in that** the method comprises allowing a user to register with a plurality of groups.

19. A method according to any of claims 14 to 18, **characterised in that** said method comprises providing users with a rating according to the effectiveness of messages sent by that particular user.

20. A method according to claim 19, **characterised in that** said method comprises allowing other users to rate messages sent to the server and it is this rating that is used to rate the effectiveness of particular users.

21. A method of according to any one of claims 19 or 20, **characterised in that** said method comprises giving users with a high rating a reward.

22. A computer readable medium carrying instructions to cause a computer to perform the method of claims 14 to 21 when programmed thereinto.

23. A computer readable medium carrying instructions arranged to cause a computing apparatus to function according to any one of claims 1 to 12 when programmed thereinto.

24. A computer readable medium carrying instructions arranged to cause a computing apparatus to function according to claim 13 when programmed thereinto.
